# EUROPÄISCHE PATENTSCHRIFT

(11) **EP 1 177 052 B1**
(45) Veröffentlichungstag und Bekanntmachung des Hinweises auf die Patenterteilung: **14.12.2005**
(21) Anmeldenummer: 00934981.2
(22) Anmeldetag: 03.05.2000
(51) Int. Cl.: B05B 15/12, B05B 15/04

(54) **VERFAHREN ZUM ABREINIGEN EINES INNENRAUMS EINER BESCHICHTUNGSKABINE, INSBESONDERE EINER PULVERBESCHICHTUNGSKABINE SOWIE BESCHICHTUNGSKABINE, INSBESONDERE PULVERBESCHICHTUNGSKABINE MIT REINIGUNGSEINRICHTUNG**
METHOD FOR CLEANING AN INTERIOR OF A COATING BOOTH, ESPECIALLY A POWDER COATING BOOTH, AND A COATING BOOTH, ESPECIALLY A POWDER COATING BOOTH EQUIPPED WITH A CLEANING DEVICE
PROCEDE DE NETTOYAGE DE L'ESPACE INTERIEUR D'UNE CABINE DE REVETEMENT, NOTAMMENT D'UNE CABINE DE REVETEMENT PAR POUDRE, CABINE DE REVETEMENT, NOTAMMENT CABINE DE REVETEMENT PAR POUDRE MUNIE D'UN DISPOSITIF DE NETTOYAGE

(30) Priorität: 04.05.1999 DE 19920466
(43) Veröffentlichungstag der Anmeldung: 06.02.2002
(73) Patentinhaber: NORDSON CORPORATION, Westlake, OH 44145 (US)
(72) Erfinder: NORDSON CORPORATION, Westlake, OH 44145 (US)
(74) Vertreter: Findlay, Alice Rosemary
(86) Internationale Anmeldenummer: PCT/EP2000/003972
(87) Internationale Veröffentlichungsnummer: WO 2000/066276

(56) Entgegenhaltungen:
- EP-A- 0 745 430
- CH-A- 560 558
- DE-A- 3 516 826
- DE-A- 19 616 220
- DE-U- 9 203 366
- US-A- 5 056 459
- PATENT ABSTRACTS OF JAPAN vol. 1995, no. 08, 29. September 1995 (1995-09-29) & JP 07 116570 A (MATSUO SANGYO KK), 9. Mai 1995 (1995-05-09)
- PATENT ABSTRACTS OF JAPAN vol. 1995, no. 07, 31. August 1995 (1995-08-31) & JP 07 088405 A (CHICHIBU ONODA CEMENT CORP), 4. April 1995 (1995-04-04)

## Beschreibung

Die Erfindung befaßt sich mit einer Weiterentwicklung einer Beschichtungskabine, insbesondere einer Pulverbeschichtungskabine, welche eine neuartige Auslegung einer Reinigungseinrichtung hat.

Aus WO 96/12568 ist eine Pulverbeschichtungskabine bekannt, weiche einen Innenraum hat, welcher von einer vorzugsweise mantelförmig ausgestalteten Umfangswand, einem Boden und einer Decke begrenzt wird. Diese Beschichtungskabine hat eine Reinigungseinrichtung, welche unter Ausführung einer Bewegung in vertikaler Richtung den Innenraum der Pulverbeschichtungskabine abreinigen kann. Im Beschichtungsbetrieb wird diese Reinigungseinrichtung außerhalb der Beschichtungskabine bereitgehalten und, wenn eine Abreinigung des Innenraums der Pulverbeschichtungskabine durchgeführt werden soll, kann sie auf geeignete Weise in den Innenraum der Beschichtungskabine eingebracht werden und kann dann während einer Bewegung in vertikaler Richtung die Pulverbeschichtungskabine insgesamt abreinigen. Wenn die Reinigungseinrichtung nicht in Betrieb ist, so wird für sie Stauraum in unmittelbarer Nähe der Pulverbeschichtungskabine benötigt, und hierunter leidet die Kompaktheit der Auslegung einer solchen Pulverbeschichtungskabine.

Die DE 196 16 220 beschreibt eine Beschichtungskabine mit einer Umfangswand, einem Boden und einer Decke, die einen Innenraum umschlieβen. Der Boden ist von der Umfangswand getrennt und lässt sich deshalb aus dem Weg bewegen, um den Zugang zu einer Reinigungseinrichtung zu ermöglichen. Der Boden bleibt dann stationär, während sich die Reinigungseinrichtung zum Reinigen des Innenraums durch die Kabine bewegt.

Die Erfindung zielt darauf ab eine Beschichtungskabine, insbesondere Pulverbeschichtungskabine, bereitzustellen, welche eine kompakte Auslegung hat und dennoch eine weitgehend vollständige automatische Abreinigung des Kabineninnenraums auf effektive Weise gestattet.

Gemäß einem Aspekt nach der Erfindung wird eine Beschichtungskabine, insbesondere Pulverbeschichtungskabine mit einer Umfassungswand, einem Boden und einer Decke, welche einen Innenraum, begrenzen, weiterhin mit einer Reinigungseinrichtung, die zum Reinigen des Innenraums in vertikaler Richtung bewegbar ist und bei der zumindest der Boden und/oder die Decke als Bodenteil bzw. als Deckenteil ausgebildet und getrennt von der Umfassungswand ist, dadurch gekennzeichnet, dass das Bodenteil und/oder das Deckenteil zugleich die Reinigungseinrichtung aufweist, wobei das Bodenteil und/oder das Deckenteil zur Abreinigung im Innenraum der kabine in vertikalen Richtung auch bewegbar ist.

Bei der erfindungsgemäßen Auslegung der Beschichtungskabine dient somit der Boden und/oder die Decke auch als Träger für die Reinigungseinrichtung, oder gemäß einer bevorzugten Ausführungsform nach der Erfindung, ist die Reinigungseinrichtung in das Bodenteil und/oder das Deckenteil integriert. Da somit bei der erfindungsgemäßen Beschichtungskabine kein zusätzlicher Stauraum zur Bereithaltung einer Reinigungseinrichtung erforderlich ist, sondern das Boden- teil und/oder das Deckenteil selbst auch die Reinigungsbewegung in vertikaler Richtung ausführen, ist eine solche Beschichtungskabine nach der Erfindung äuβerst kompakt ausgelegt und somit auch für Kabinen mit kleineren Höhen- abmessungen und bei gedrängten Platzverhältnissen geeignet. Zum anderen lassen sich auch die entsprechenden Versorgungseinrichtungen für die Reinigungseinrichtung sowie die entsprechenden Antriebseinrichtungen für die Bewegung der Reinigungseinrichtung bei der Durchführung der Abreinigungsarbeiten an einer geeigneten Stelle der Pulverbeschichtungskabine installieren. In Abhängigkeit von der Höhe der Kabine oder anderen Gegebenheiten, kann es ausreichen, daβ nur das Bodenteil oder das Deckenteil mit der Reinigungseinrichtung zur Durchführung der Abreinigungsarbeiten eingesetzt wird, aber es ist auch möglich, daβ sowohl das Deckenteil als auch das Bodenteil zur Durchführung der Abreinigungsarbeiten gleichzeitig oder abwechselnd eingesetzt werden. Wenn sowohl das Bodenteil als auch das Deckenteil mit einer Reinigungseinrichtung ausgestattet sind, so ist auch beispielsweise eine solche Vorgehensweise möglich, daß man eine der Reinigungseinrichtungen für das Blasen und/oder Absaugen nutzt und die andere als eine Feinreinigungseinrichtung ausgelegt ist, mittels der beispielsweise ein Nachwischen mittels eines Schwamms oder dergleichen durchgeführt wird. Natürlich kann gegebenenfalls auch eine der Reinigungseinrichtungen in Form einer Vorreinigungseinrichtung ausgelegt sein.

Zur Durchführung der Abreinigungsarbeiten des Innenraums der Beschichtungskabine führt das Bodenteil und/oder das Deckenteil in vertikaler Richtung eine Bewegung aus, so daß der gesamte Innenraum von der Reinigungseinrichtung erfaßt und abgereinigt wird. Wenn sowohl das Bodenteil als auch das Deckenteil eine Reinigungseinrichtung hat, lassen sich die Bewegungswege dieser Teile in vertikaler Richtung bei der Abreinigung verkürzen und hierdurch lassen sich die Abreinigungsarbeiten schneller durchführen, so daß man auf wirtschaftliche und effektive Weise insbesondere nur mit kürzesten Stillstandszeiten der Pulverbeschichtungskabine einen Farbwechsel vornehmen kann.

Vorzugsweise umfaßt jede Reinigungseinrichtung eine Abblaseinrichtung und eine Absaugeinrichtung. Die Abblaseinrichtung und die Absaugeinrichtung sind vorzugsweise axial beabstandet zueinander angeordnet. Zweckmäßigerweise liegen aber die Absaugeinrichtung und die Abblaseinrichtung nahe beieinander, so daß die durch die Abblaseinrichtung hierbei von der Innenwand abgelösten Pulverpartikel auf möglichst kurzem Wege in die Absaugeinrichtung gelangen, und die Pulverpartikel dann zu den der Absaugeinrichtung nachgeschalteten Filter- und Zykloneinrichtung sowie gegebenenfalls zur Rückgewinnungseinrichtung gelangen. Mit Hilfe der Abblaseinrichtung kann auf gezielte Weise ein Luftstrahl auf die entsprechenden Wandbereiche der Pulverbeschichtungskabine gerichtet werden, um hierbei in unterstützender Weise das an den Wandflächen haftende Pulver vollständig abzulösen und in die Absaugeinrichtung zu treiben.

Der in Bewegungsrichtung vorauslaufende Bereich der Reinigungseinrichtung kann als Abblaseinrichtung ausgelegt sein, und der nachlaufende Bereich als Absaugeinrichtung. Natürlich kann die Anordnung auch gerade umgekehrt werden. Wesentlich jedoch ist es, daß die Abblaseinrichtung und die Absaugeinrichtung möglichst nahe beieinander liegen und daher möglichst kurze Wege für das von den Wandflächen abgelöste Pulver zu der Absaugeinrichtung vorhanden sind.

Vorzugsweise sind die dem Bodenteil zugeordnete Abblaseinrichtung und die Absaugeinrichtung in Form einer Düsenplatte ausgebildet und die Absaugung erfolgt an dem zugeordneten Umfangswandbereich in unmittelbarer Nähe des Auftreffbereichs der Blasluft. Bei dieser Auslegungsform können die zugeordneten Randbereiche des Innenraums der Kabine in effektiver Weise derart abgereinigt werden, daß wirksam durch diese Auslegung verhindert wird, daß das mittels der Blasluft von der Fläche entfernte Pulver in den bereits gereinigten Bereich der Kabine zurückgelangen kann. Auch erhält man hierdurch eine kompakte Auslegung einer dem Bodenteil zugeordneten Reinigungseinrichtung, welche insbesondere eine geringe Bauhöhe hat.

Vorzugsweise umfaßt die Abblaseinrichtung mehrere in Umfangsrichtung verteilt angeordnete Blasdüsen, über die Blasluft auf die abzureinigende Wandfläche der Kabine gerichtet wird, und vorzugsweise umfaßt die Abblaseinrichtung mehrere in Umfangsrichtung verteilt angeordnete Saugöffnungen, über die das mit Hilfe der Blasluft von der Wandfläche der Kabine abgelöste Pulver auf möglichst kurzen Wegen in die Absaugeinrichtung gelangen kann. Somit kann die Reinigungseinrichtung vollumfänglich den Innenraum der Kabine abreinigen und die Abreinigungsarbeiten lassen sich äußerst effizient innerhalb kurzer Zeit durchführen. Hierdurch wird ein möglichst wirtschaftlicher Betrieb bei der Beschichtung von Teilen insbesondere im Durchlaufbetrieb erreicht.

Zweckmäßigerweise kann zusätzlich zu dem Bodenteil und/oder dem Deckenteil eine Abschottung vorgesehen sein, mittels welcher während des Beschichtungsbetriebs ein zuverlässiger dichter Abschluß gewährleistet wird, und zudem auch vermieden wird, daß bei der vertikalen Bewegung des Bodenteils und/oder des Deckenteils bei der Abreinigung Pulverpartikel ins Freie oder die Umgebung gelangen können.

Gegebenenfalls kann das Bodenteil und/oder das Deckenteil mehrere Abschnitte umfassen, welche relativ zueinander beweglich sind. Bei einer solchen Ausgestaltung können die Abschnitte des Bodenteils und/oder des Deckenteils aufeinanderzu bewegt werden, so daß sich ihre Außenabmessungen verringern und dann in dieser Anordnung im Kabineninnenraum in vertikaler Richtung auf die gewünschte Weise zur Abreinigung bewegt werden können. Insbesondere bei Kabinen, welche im Deckenbereich einen Durchgangsschlitz für den Durchgang von Gehängen von einem Förderer haben, können hierbei die Abschnitte des Deckenteils beim Beschichtungsbetrieb durch ihr Eigengewicht sicher und zuverlässig abgedichtet auf der zugeordneten Begrenzung der Umfassungswand auf liegen. Bei der Durchführung von Abreinigungsarbeiten werden diese Abschnitte dann zusammengefahren und haben dann solche Abmessungen, daß sie im Innenraum der Beschichtungskabine in vertikaler Richtung bewegbar sind und hierbei die Abreinigungsarbeiten durchgeführt werden können.

Bei einer zweckmäßigen Ausgestaltungsform der Beschichtungskabine nach der Erfindung ist die dem Deckenteil zugeordnete Abblaseinrichtung in Form eines an die Querschnittsgestalt der Kabine angepaßten Blasringes ausgebildet, welcher bei zusammengefahrener Stellung der Abschnitte des Deckenteils dem Innenraum zugewandt anordenbar ist.

Diese Abblaseinrichtung kann in Umfangsrichtung angeordnete Düsen mit entsprechenden Düsenaustrittsöffnungen aufweisen, welche derart beschaffen und ausgelegt sind, daß das Deckenteil und gegebenenfalls das Bodenteil gleichzeitig mittels Blasluftunterstützung zuverlässig und schnell abgereinigt werden können.

Bei einer Auslegungsform, bei der nur das Bodenteil im Innern des Kabinenraums vertikal bewegbar ist, kann an einem solchen Deckenteil in den voranstehend beschriebenen Einzelheiten eine Betätigungseinrichtung zugeordnet sein, welche die Abschnitte des Deckenteils für den Abreinigungsbetrieb aufeinanderzu bewegt und gegebenenfalls zugleich diese Abschnitte vom oberen Rand der Umfassungswand geringfügig abhebt Die Betätigungseinrichtung kann zweckmäßigerweise in Form eines Kniehebelmechanismus ausgelegt sein. Mittels einer solchen Betätigungseinrichtung lassen sich dann die beiden Abschnitte des Deckenteils einerseits in eine Reinigungsstellung und andererseits in eine Betriebsstellung für die Durchführung des üblichen Beschichtungsbetriebs bringen. Den Deckenabschnitten sind natürlich entsprechende Absaugeinrichtungen zugeordnet.

An den Bereichen zwischen den beweglichen Deckenteilen und/oder Bodenteilen können natürlich gegebenenfalls noch übliche zusätzliche Dichtungen vorgesehen sein, welche sicherstellen, daß im üblichen Beschichtungsbetrieb der Kabineninnenraum durch das Deckenteil und/oder das Boden- teil zuverlässig dicht abgeschlossen ist.

Wenn insbesondere das Deckenteil wenigstens zwei Abschnitte umfaßt, können jedem Abschnitt gesonderte Blas- und Absaugeinrichtungen zugeordnet werden. Allerdings können die Abschnitte auch so gestaltet werden, daß im zusammengefahrenen Zustand die Einrichtung für das Abblasen und die Einrichtung für das Absaugen gemeinsam beiden Abschnitt zugeordnet werden. Die entsprechenden Zu- und Ableitungen sind dann exzentrisch an nur einem Abschnitt des Decken- und/oder Bodenteils vorgesehen.

Die entsprechenden Schlauch- und Leitungsverbindungen zu der Reinigungseinrichtung sind selbstverständlich derart gestaltet, daß sie bei der vertikalen Bewegung des Boden- teils und/oder des Deckenteils behinderungsfrei mitgeführt werden können. Hierfür kommen beispielsweise teleskopartig ineinanderfahrbare Leitungsabschnitte beispielsweise für die Absaugeinrichtung oder dergleichen in Betracht, und die Schlauchleitung beispielsweise zur Zuführung der Blasluft kann in Form einer Schlauchtrommel im Grundzustand aufgewickelt sein und sie wird bei der Bewegung in vertikaler Richtung zur Abreinigung in entsprechender Weise von der Schlauchtrommel abgezogen. Durch solche Auslegungen kann vermieden werden, daß bei der hin- und hergehenden Vertikalbewegung zur Abreinigung die Versorgungsleitungen die Abreinigungsbewegung behindern können.

Vorzugsweise sind im Bereich derAbsaugeinrichtung(en) steuerbare Klappen zur Verbindung mit nachgeschalteten Zykloneinrichtungen, Nachfiltereinrichtungen und/oder Rückgewinnungseinrichtungen vorgesehen. Wenn man insbesondere bei einem Farbwechsel Ton-in-Ton eine Abreinigung vornimmt, kann man mit dieser entsprechenden Klappenanordnung die dem Boden- und/oder Deckenteil zugeordnete Absaugeinrichtung in Schließstellung der Klappe abkoppeln, so daß man die üblicherweise für den Kabineninnenraum auch im Beschichtungsbetrieb vorhandene Absaugeinrichtung, welche meist in Längsrichtung der Kabine verläuft, ausnutzen kann, um das abgereinigte Pulver direkt zur Rückgewinnungseinrichtung zurückzuleiten. Natürlich können im Bereich der Absaugeinrichtung auch noch weitere Klappen angeordnet werden, wenn man entsprechende Umleitungen von entsprechendem abgereinigten Pulver vornehmen will.

Ferner wird nach der Erfindung eine Beschichtungskabine der vorstehend beschriebenen Art bereitgestellt, welche gemäß einer alternativen Ausführungsform derart ausgelegt ist, daß dem Deckenteil wenigstens eine Decken-Abreinigungseinrichtung zugeordnet ist, welche Druckluftdüsen zum Abblasen des anhaftenden Pulvers und wenigstens eine Absaugeinrichtung in der Decken-Abreinigungseinrichtung für das abgeblasene Pulver umfaßt, die den gesamten Raum zwischen dem Deckenteil und dem Bodenteil in seiner Endstellung abreinigt. Bei dieser Auslegungsform wird ein in sich selbstständig arbeitende Decken-Abreinigungseinrichtung bereitgestellt, welche längsverfahrbar in dem Raum zwischen dem Deckenteil und dem Bodenteil angeordnet ist und welche keine zusätzlichen Einrichtungen an dem Deckenteil, wie Absaugeinrichtungen oder dergleichen erforderlich macht. Hierdurch erhält man nicht nur bauliche Vereinfachungen bei der Beschichtungskabine, sondern es läßt sich auch die gesamte Bauhöhe der Beschichtungskabine reduzieren.

Vorzugsweise weist die Absaugeinrichtung der Decken-Abreinigungseinrichtung einen oder mehrere Saugschlauchanschlüsse auf, welche vorzugsweise mit einem Nachfilter einer Pulverrückgewinnungseinrichtung, insbesondere über Klappen, steuerbar verbunden sind.

Die gemäß dieser alternativen Ausführungsform der Beschichtungskabine vorgesehene Decken-Abreinigungseinrichtung ist beispielsweise mittels Teleskopschienen in dem Raum zwischen dem Deckenteil und dem Bodenteil in seiner Endstellung längsverschieblich angeordnet und kann somit in diesem Raum in entsprechender Weise verfahren werden, so daß der gesamte Decken- und Bodenbereich mittels der Decken-Abreinigungseinrichtung abgereinigt werden kann. Die Decken-Abreinigungseinrichtung bläst über die Druckluftdüsen Luft gegen die zugeordneten Decken- und Bodenbereiche, und das hierbei abgeblasene Pulver wird sofort über die Absaugeinrichtung der Decken-Abreinigungseinrichtung selbst abgesaugt und dann gegebenenfalls zu dem Nachfilter einer Rückgewinnungseinrichtung weitergeleitet.

Gemäß einer Ausführungsvariante kann die Decken- Abreinigungseinrichtung zwei Reinigungseinheiten umfassen, welche jeweils Druckluftdüsen und Absaugeinrichtungen umfassen, und welche jeweils dann nur den zugeordneten halben Raum zwischen dem Deckenteil und dem Bodenteil abreinigen. Ansonsten können diese Reinigungseinheiten übereinstimmend wie die Einzelheiten der Decken-Abreinigungseinrichtung ausgelegt sein.

Bei der erfindungsgemäßen Auslegung einer Beschichtungskabine, insbesondere einer Pulverbeschichtungskabine, mit einer Reinigungseinrichtung ist es wesentlich, daß die Reinigungseinrichtung zugleich das Bodenteil und/oder das Deckenteil der Kabine im Beschichtungsbetrieb bildet, aber bei der Durchführung von Abreinigungsarbeiten eine Bewegung in vertikaler Richtung entlang der Innenwandfläche der Kabine ausführen kann oder können, so daß das Bodenteil und/oder das Deckenteil gleichzeitig mehrere Funktionen in sich vereinigen können, so daß man keinen zusätzlichen Stauraum für die Bereithaltung einer Reinigungseinrichtung außerhalb der Beschichtungskabine benötigt. Hierdurch erhält man eine kompakte Bauweise einer solchen Beschichtungskabine mit automatischer Reinigungseinrichtung für den Kabineninnenraum.

Die Erfindung wird nachstehend an Hand von bevorzugten Ausführungsformen unter Bezugnahme auf die beigefügte Zeichnung näher erläutert. Darin zeigt:
- Fig. 1: eine schematischen Schnittansicht eine Beschichtungskabine nach der Erfindung,
- Fig. 2: eine perspektivische schematische Ausschnittsansicht einer bevorzugten Ausführungsform eines Deckenteils,
- Fig. 3: eine schematische Teilschnittansicht in Längsansicht einer Ausführungsvariante einer Beschichtungskabine in der für den Beschichtungsbetrieb bestimmten Stellung, und
- Fig. 4: eine schematische Längsschnittansicht der in Figur 3 gezeigten Beschichtungskabine mit der Reinigungseinrichtung in Reinigungsstellung sowie einer ausschnittshaften Vergrößerung einer Einzelheit hiervon,
- Fig. 5: eine Figur 4 ähnliche Längsschnittansicht mit einer abgewandeltenAusführungsformeiner Decken-Abreinigungseinrichtung, und
- Fig. 6: eine Figur 5 ähnliche Längsschnittansicht zur Verdeutlichung einer Ausführungsvariante der in Figur 5 gezeigten Decken-Abreinigungseinrichtung.

In den Figuren der Zeichnung ist insgesamt mit 1 eine Beschichtungskabine, insbesondere eine Pulverbeschichtungskabine bezeichnet. Eine solche Pulverbeschichtungskabine 1 hat nicht näher dargestellte Pulversprüheinrichtungen, sowie ebenfalls nicht näher dargestellte Pulveraufbereitungs- und Versorgungseinrichtungen für den Pulverbeschichtungsbetrieb. Die Pulverbeschichtungskabine 1 hat eine vorzugsweise mantelförmig ausgebildete Umfassungswand 2, ein Bodenteil 3 und ein Deckenteil 4. Die Umfassungswand 2 begrenzt in Verbindung mit dem Bodenteil 3 und dem Deckenteil 4 einen Innenraum 5 der Beschichtungskabine 1.

Obgleich nicht näher dargestellt ist, kann beispielsweise eine Beschichtungskabine 1 auch nur ein von der Umfassungswand 2 gesondertes Bodenteil 3 oder Deckenteil 4 haben. Hierdurch soll zum Ausdruck gebracht werden, daß beispielsweise auch Auslegungsformen von Beschichtungskabinen 1 in Betracht kommen, bei denen der Boden oder die Decke auf an sich übliche Weise ausgestaltet sind, und fest mit dem entsprechenden Ende der Umfassungswand 2 verbunden sind.

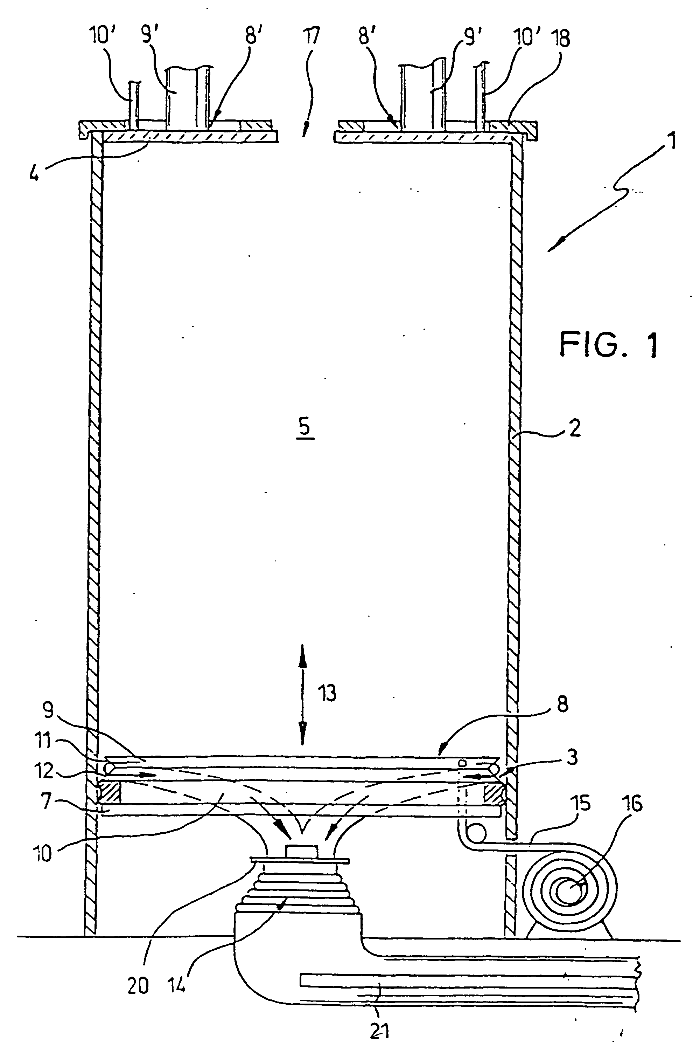

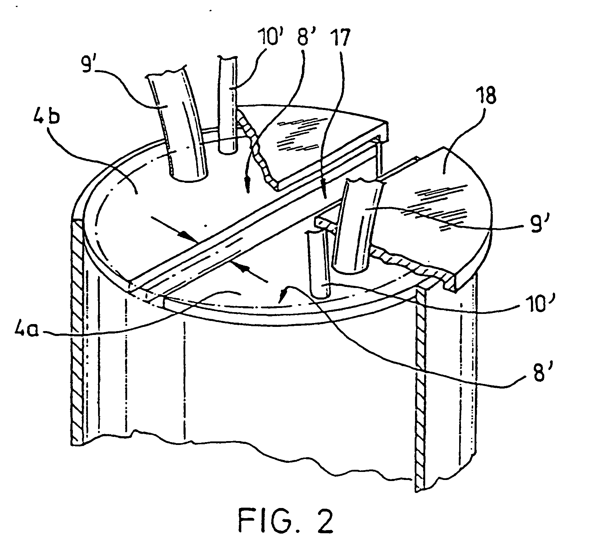

Wie aus den Figuren 1 und 2 zu ersehen ist, umfaßt das Deckenteil 4 beispielsweise wenigstens zwei Abschnitte 4a, 4b, welche nicht mit der Umfassungswand 2 verbunden, sondern hiervon getrennt sind. Beim Pulverbeschichtungsbetrieb begrenzen die beiden Abschnitte 4a. 4b des Deckenteils 4 beispielsweise einen Durchgangsschlitz 17 für ein nicht näher dargestelltes Gehänge eines Förderers, an welchem die zu beschichtenden Teile angeordnet sind und durch den Innenraum 5 der Beschichtungskabine 1 transportiert werden. Hierbei kann die Auslegung derart getroffen sein, daß die beiden und die Decke der Beschichtungskabine 1 bildenden Abschnitte 4a, 4b des Deckenteils 4 aufeinanderzu bewegt werden, so daß der Schlitz 17 nicht mehr vorhanden ist, wenn beispielsweise eine Abreinigung durchgeführt werden soll, so daß dann die beiden Abschnitte 4a, 4b des Deckenteils 4 kleinere Abmessungen als die Abmessungen des Innenraums 5 haben, und daher eine vertikale Bewegung zur Abreinigung des Innenraums S ausführen können. Auch in einem solchen Fall ist dann die Reinigungseinrichtung 8' in ein solches Deckenteil 4 eingebaut oder zusätzlich an diesem vorgesehen. In der Bereitschaftsstellung oder im Ruhezustand der Reinigungseinrichtung 8' werden dann die Abschnitte 4a, 4b eines solchen Deckenteils 4 wieder voneinander wegbewegt und schließen den Kabineninnenraum S dicht ab und liegen vorzugsweise auf dem Stimende der Umfassungswand 2 auf. Für den Beschichtungsbetrieb wird dann wieder ein Durchgangsschlitz 17 zwischen den beiden Abschnitten 4a, 4b eines solchen Deckenteils 4 gebildet. Natürlich können gegebenenfalls noch zusätzliche Abdichtungen zwischen dem Deckenteil und der Kabineninnenwand vorgesehen sein.

Wie insbesondere aus Figur 2 zu ersehen ist, kann jedem Abschnitt 4a, 4b jeweils eine Abblaseinrichtung 9' und/oder eine Absaugeinrichtung 10' zugeordnet werden. Bei entsprechender Ausgestaltung der Abschnitte 4a und 4b kann es aber auch ausreichen, den Abschnitten 4a, 4b des Deckenteils 4 nur eine einzige Abblaseinrichtung und/oder Absaugeinrichtung zuzuordnen, was nicht weiter dargestellt ist. Hierbei werden dann die beiden Abschnitte 4a, 4b im Fall der Abreinigung in wechselseitige kommunizierende Verbindung gebracht. Die Abblaseinrichtung und/oder die Absaugeinrichtung ist exzentrisch mit einem der Abschnitte 4a oder 4b verbunden.

Vorzugsweise ist deckenseitig und oberhalb des Deckenteils 4 eine Abschlußplatte 18 vorgesehen, welche zweckmäßigerweise den oberen Rand der Umfassungswand 2 umgreift, wenn die Abschnitte 4a und 4b zusammengefahren sind und eine Abreinigung des Kabineninnenraums S erfolgt, um einen dichten Abschluß oberseitig bei der Durchführung der Reinigungsarbeiten sicherzustellen. Wenn die Abschnitte 4a und 4b im beabstandeten Zustand unter Bildung des Durchgangsschlitzes 17 angeordnet sind, kann die Abschlußplatte 18 gegebenenfalls an der Oberseite der Beschichtungskabine 1 vorzugsweise unter Mitnahme bei der Vertikalbewegung des Decken- teils 4 abgehoben werden.

Obgleich bei dem dargestellten Ausführungsbeispiel die Beschichtungskabine 1 zylinderförmig ausgebildet ist und einen Kreisquerschnitt hat, ist die Erfindung hierauf natürlich nicht beschränkt, sondern es kommen auch vieleckige, viereckige, rechteckige, ovale oder andere Querschnitte bei der Beschichtungskabine 1 in Betracht, wobei natürlich auch Kombinationen hiervon gegebenenfalls verwirklicht werden können. Lediglich der Einfachheit halber wurde in der Zeichnung eine Beschichtungskabine 1 mit rundem Querschnitt gewählt. Bevorzugt werden beispielsweise Querschnittsformen, die rundoval oder flachoval ausgebildet sind.

Nunmehr soll unter Bezugnahme auf Figur 1 das Bodenteil 3 näher erläutert werden.

Dieses Bodenteil 3 bildet den Boden der Beschichtungskabine 1 im Beschichtungsbetrieb und ist in seiner tiefsten Stellung dann derart festgelegt, daß der Innenraum 5 der Beschichtungskabine 1 dicht abgeschlossen ist. Gegebenenfalls kann noch eine Abschottung 7 unterhalb des Bodenteils 3 vorgesehen sein, welche als zusätzliche Bodenabschottung bei den Reinigungszyklen dient.

Wie aus der Zeichnung zu ersehen ist, weist das Bodenteil 3 vorzugsweise in integrierter Bauform eine Reinigungseinrichtung 8 auf, welche vorzugsweise eine Abblaseinrichtung 9 und eine Absaugeinrichtung 10 umfaßt. Die Abblaseinrichtung 9 hat zweckmäßigerweise in Umfangsrichtung regelmäßig verteilt angeordnete Blasdüsen 11, über die Blasluft auf die Umfassungswand 2 bei der Abreinigung geblasen werden kann. Die Absaugeinrichtung 10 umfaßt vorzugsweise in Umfangs- richtung regelmäßig verteilt angeordnete Saugöffnungen 12. Bei dem dargestellten Beispiel sind die Abblaseinrichtung 9 und die Absaugeinrichtung 10 axial beabstandet zueinander angeordnet, wobei die Abblaseinrichtung 9 in Bewegungsrichtung der Reinigungseinrichtung 8 gebildet von dem Bodenteil 3 am vorauslaufenden Bereich angeordnet ist, während die Absaugeinrichtung 10 am nachlaufenden Bereich liegt. Natürlich kann diese Anordnung von Abblaseinrichtung 9 und Absaugeinrichtung 10 in Abweichung von der dargestellten bevorzugten Ausführungsform auch umgekehrt gewählt werden. An die Absaugeinrichtung 10 ist in Form einer Teleskopanordnung eine Absaugleitung 14 angeschlossen. Diese Absaugleitung 14 führt dann zu einer nicht näher dargestellten und nachgeschalteten Filter- und Zykloneinrichtung beispielsweise. Mit der Abblaseinrichtung 9 ist zur Versorgung mit Blasluft beispielsweise eine Schlauchleitung 15 verbunden, welche auf einer Schlauchtrommel 16 aufgewickelt ist. Wie schematisch in Figur 1 bezüglich der bodenseitigen Absaugeinrichtung 10 gezeigt ist, ist im Bereich der Absaugleitung 14 eine Klappe 20 angeordnet, welche gegebenenfalls geöffnet und geschlossen werden kann. Wenn zum Beispiel ein Farbwechsel Ton-in-Ton vorgenommen wird, kann das bei der Abreinigung anfallende überschüssige Pulver wieder im Pulverkreislauf zurückgewonnen werden, und beispielsweise der nicht näher dargestellten Rückgewinnungseinrichtung der Beschichtungsanlage zugeleitet werden. In diesem Fall wird dann die Klappe 20 in der Absaugleitung 14 geschlossen und das bei der Abreinigung anfallende überschüssige Pulver wird über die beim üblichen Beschichtungsbetrieb eingesetzte Absaugeinrichtung für den Kabineninnenraum ebenfalls nicht dargestellt) dann direkt der Rückgewinnungseinrichtung zugeführt. Eine solche beim üblichen Beschichtungsbetrieb wirkende Absaugeinrichtung kann beispielsweise in Form eines Schlitzes ausgebildet sein, welcher sich über den Großteil der Länge oder der Höhe der Beschichtungskabine erstreckt. Dieses Absaugsystem ist üblicherweise mit der Rückgewinnungseinrichtung oder dem zugeordneten Rückgewinnungssystem aus Gründen eines ökonomischen Pulververbrauchs verbunden. Auch kann im Bereich der Absaugleitung 14 gegebenenfalls ein nicht näher dargestelltes Schauglas und/oder eine Putzklappe im Wandbereich der Absaugleitung 14 vorgesehen sein.

Um auch die Absaugleitung 14 selbst reinigen zu können, kann ein schematisch dargestellter Schlitz 21 vorgesehen sein, welcher mittels einer abnehmbaren Abdeckung verschließbar ist. Über diesen Schlitz 21 können dann geeignete Reinigungseinrichtungen zur Abreinigung auch der bodenseitigen Absaugeinrichtung 10 eingeführt werden.

Alle diese Ausführungseinzelheiten bezüglich der am Bodenteil 3 vorgesehenen Reinigungseinrichtung 8 können auch bei der Reinigungseinrichtung 8' des Deckenteils 4 mit den Abschnitten 4a und 4b in gleicher oder ähnlicher Weise vorgesehen sein.

Wenn der Innenraum S der Beschichtungskabine 1 beispielsweise beim Pulverwechsel abgereinigt werden soll, wird das Bodenteil 3 und/oder das Deckenteil 4 in vertikaler Richtung, wie mit dem Pfeil 13 angedeutet, auf und ab bewegt. Die über die Blasdüsen 11 von der Abblaseinrichtung 9, 9' abgegebenenAbblasstrahlen werden gegen die Innenwand der Umfassungswand 2 gerichtet, um die Pulverpartikel von dieser Innenwand abzulösen. Mit Hilfe der Absaugeinrichtung 10, 10' werden dann die bei der Abreinigung von dem Innenraum 5 abgelösten Pulverpartikel wie mit Pfeilen angedeutet eingesaugt. Bei dieser vertikalen Bewegung des Bodenteils 3 und/oder des Deckenteits 4 in Richtung des Pfeils 13 werden die Schlauchleitung 15 der Abblaseinrichtung 9, 9' und die Absaugleitung 14 der Absaugeinrichtung 10, 10' automatisch und gleichförmig mitgeführt. Somit kann während den Reinigungszyklen der Innenraum 5 auf effiziente und vollständige Weise von Pulver befreit werden. Eine solche Abreinigung ist beispielsweise beim Farbwechsel erforderlich. Während der Reinigungszyklen dient die Abschottung 7 zusätzlich zur bodenseitigen Abschottung des Innenraums 5, so daß hierüber kein Pulver zur Umgebung austreten kann. In ähnlicher Weise gewährleistet die Abschlußplatte 18 deckenseitig einen dichten Abschluß bei der Durchführung der Reinigungsarbeiten. Die Abschlußplatte 18 kann auch in Abschnitte unterteilt sein, welche zur Durchführung der Reinigungsarbeiten zusammengefahren werden.

Wenn die Abreinigungsarbeiten mit Hilfe der Reinigungseinrichtung 8, 8' ausgeführt sind, wird dann das Bodenteil 3 und/oder das Deckenteil 4 in seine jeweilige Ausgangsposition zurückgefahren und bleibt in dieser arretiert, so daß das von der Umfassungswand 2 getrennte Bodenteil 3 und/oder Deckenteil 4 jeweils in bestimmungsgemäßer Weise den Boden und/oder die Decke der Beschichtungskabine 1 bilden. Die kommunizierende Verbindungen von Abblaseinrichtung 9, 9' und zugeordneten Versorgungseinrichtung und der Absaugeinrichtung 10, 10' und nachgeschalteten Einrichtungen sind zweckmäßigerweise in das Bodenteil 3 und/oder das Deckenteil 4 integriert.

Selbstverständlich ist die Erfindung nicht auf das vorstehend beschriebene Ausführungsbeispiel beschränkt, sondern es sind zahlreiche Abänderungen und Modifikationen möglich, die der Fachmann im Bedarfsfall treffen wird, ohne den Erfindungsgedanken zu verlassen. Insbesondere können die Abblaseinrichtung 9, 9' und die Absaugeinrichtung 10, 10' der Reinigungseinrichtung 8, 8' gegebenenfalls versenkbar in dem Bodenteil 3 und dem Deckenteil 4 angeordnet sein, so daß die Reinigungseinrichtung 8, 8' beim Beschichtungsbetrieb von dem Bodenteil 3 und/oder dem Deckenteil 4 selbst geschützt wird, um Verschmutzungen zu vermeiden. Gegebenenfalls kann die Reinigungseinrichtung 8, 8' auch noch zusätzliche Abstreiflippen aufweisen, welche das Pulver von der Innenwandfläche der Umfassungswand 2 durch Überstreichen abstreifen. Ferner können gegebenenfalls auch noch Bürsteneinrichtungen oder dergleichen vorgesehen sein. Auch ist es möglich, eine Naßreinigung durchzuführen, wozu dann zusätzlich noch Wasserversorgungseinrichtungen gegebenenfalls vorgesehen sein können. Auch sind Kombinationen von diesen zusätzlichen Einrichtungen bei der Reinigungseinrichtung 8, 8' möglich. Gegebenenfalls kann die Reinigungseinrichtung 8, 8' zusammen mit dem Bodenteil 3 und/oder dem Deckenteil 4 auch eine Drehbewegung um seine eigene Achse in gesteuerter Weise ausführen. Natürlich sind dann die Anschlüsse für die Abblaseinrichtung 9, 9' und die Absaugeinrichtung 10, 10' entsprechend abweichend zu der dargestellten Ausführungsform auszugestalten.

Ferner können als Antriebseinrichtung für die vertikale Bewegung des Bodenteils 3 und/oder des Deckenteils 4, wie in Pfeilrichtung 13 näher dargestellt, und für die Ausführung dieser Reinigungsbewegung der Reinigungseinrichtung 8, 8' entsprechend geeignete Stellantriebe eingesetzt werden, welche mechanisch, hydraulisch, pneumatisch, elektrisch oder kombiniert hiervon betrieben werden können. Irgendein hierfür geeigneter Antrieb kann eingesetzt werden, um das Bodenteil 3 und/oder das Deckenteil 4 zusammen mit der Reinigungseinrichtung 8, 8' in vertikaler Richtung 13 im Innenraum 5 auf und ab bewegen zu können.

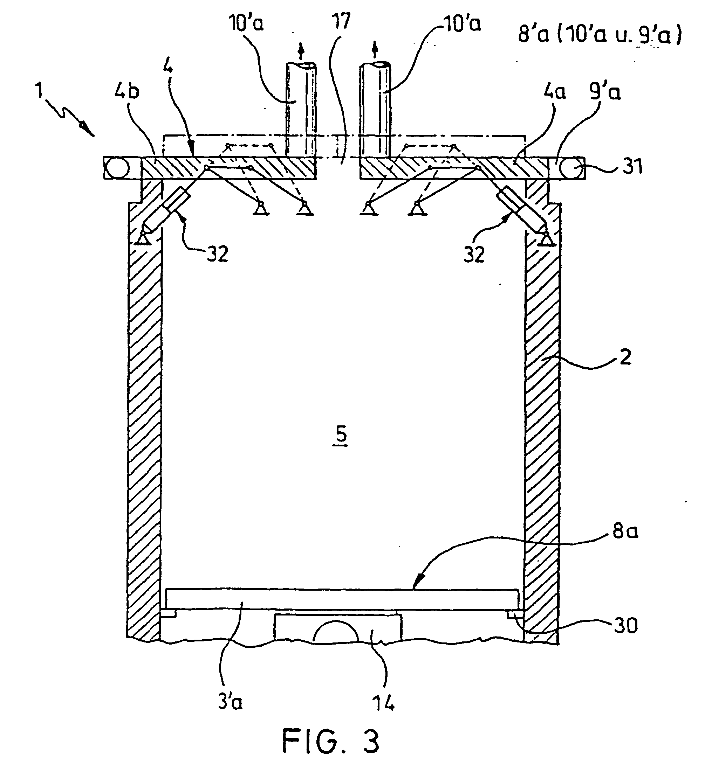

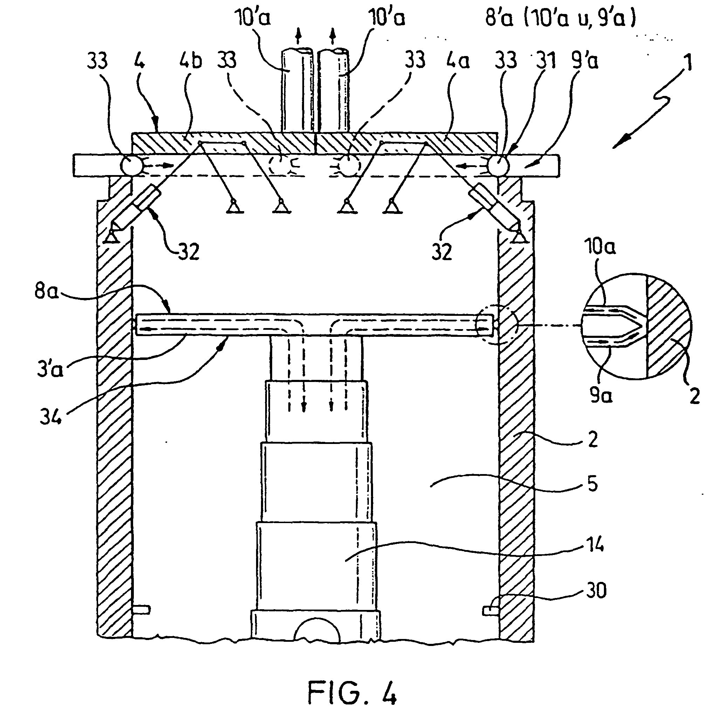

An Hand den Figuren 3 und 4 wird eine Ausführungsvariante einer Beschichtungskabine 1 erläutert, bei welcher gleiche oder ähnliche Teile mit denselben Bezugszeichen versehen sind. Eine nähere Erläuterung dieser übereinstimmenden oder weitgehend übereinstimmenden Teile kann daher entfallen. Auch die zuvor im Zusammenhang mit den Figuren 1 und 2 erläuterten Abänderungen und Modifikationen treffen in gleicher oder ähnlicher Weise auch auf die Ausführungsform nach den Figuren 3 und 4 zu.

In Figur 3 ist schematisch in einer Längsschnittansicht die Beschichtungskabine 1 gezeigt. Bei der dort gewählten Darstellung befindet sich die Beschichtungskabine im Beschichtungsbetrieb. Das Bodenteil 3'a mit den zugehörigen Einrichtungen ist ähnlich wie bei den voranstehenden Figuren ausgelegt. Wie gezeigt, ist an der Innenwandfläche der Beschichtungskabine 1 ein vorspringender Anschlag 30 vorgesehen, auf welchem das Bodenteil 3'a in der üblichen Beschichtungsbetriebsstellung zuverlässig aufliegt. Gegebenenfalls können auch nicht näher dargestellte und an sich übliche Dichtungssysteme vorgesehen sein, welche einen dichten Abschluß des Kabineninnenraums 5 gegenüber dem unteren Bereich der Beschichtungskabine 1 gewährleisten. Die entsprechend dem Bodenteil 3'a zugeordneten Einrichtungen, wie Reinigungseinrichtung 8a, Abblaseinrichtung 9a und Absaugeinrichtung 10a sind nur schematisch und teilweise sichtbar dargestellt und sind weitgehend ähnlich wie voranstehend erläutert ausgelegt.

Diese an Hand den Figuren 3 und 4 gezeigte Ausführungsvariante stellt eine Kombination von einer in vertikaler Richtung im Kabineninnenraum 5 verfahrbaren Reinigungseinrichtung 8a, welche dem Bodenteil 3a zugeordnet ist, und einer modifizierten Ausführungsvariante einer Reinigungseinrichtung 8'a dar, welche dem Deckenteil 4 zugeordnet ist. Das Deckenteil 4 umfaßt zwei Abschnitte 4a und 4b, welche in der Betriebsstellung der Beschichtungskabine in einem Abstand zueinander angeordnet sind und den Durchgangsschlitz 17 beispielsweise für ein Gehänge bilden. Die beiden Abschnitte 4a und 4b des Deckenteils 4 liegen fest und zuverlässig auf dem oberen Rand der Umfassungswand 2 auf. Gegebenenfalls können an dieser Stelle noch geeignete Dichtungssysteme vorgesehen sein. Die dem Deckenteil 4 zugeordnete Reinigungseinrichtung 8'a ist beispielsweise in Form eines ringförmigen Gebildes ausgelegt, welches hinsichtlich seines Querschnitts an den Außenumriß des Deckenteils 4 angepaßt ist. In Figur 3 ist diese Reinigungseinrichtung 8'a beispielsweise mit 31 bezeichnet und in ihrer Ruhestellung dargestellt.

Wie aus Figur 4 zu ersehen ist, ist den Abschnitten 4a und 4b eine Betätigungseinrichtung 32 zugeordnet, welche vorzugsweise in Form eines Kniehebelmechanismus ausgelegt ist. Mit Hilfe dieser Betätigungseinrichtung 32 werden die beiden Abschnitte 4a und 4b des Deckenteils 4 in die in Figur 4 gezeigte Reinigungsstellung gebracht, d.h. die Abschnitte 4a und 4b werden geringfügig angehoben und in Richtung aufeinanderzu bewegt, so daß der Durchgangsschlitz 17 nach Figur 3 dicht geschlossen ist. Mit 10'a ist die Absaugeinrichtung für das Deckenteil 4 verdeutlicht, welche ähnlich wie zuvor beschrieben ausgelegt sein kann. Mit Hilfe der ringförmigen Reinigungseinrichtung 31, welche in Reinigungsstellung der Beschichtungskabine 1 nach Figur 4 in dem Zwischenraum zwischen den geringfügig angehobenen Abschnitten 4a und 4b und der Oberkante der Umfassungswand 2 gebildeten Zwischenraum angeordnet ist, umfaßt mehrere Düseneinrichtungen 33, welche als Abblaseinrichtungen 9'a dienen. Wie schematisch angedeutet, wird über die Düseneinrichtungen 33 Abblasluft vorzugsweise derart gerichtet, daß sie auf die dem Innenraum 5 zugewandten, unteren Seiten der Abschnitte 4a und 4b auftreffen und dort das überschüssige Pulver abblasen. Über die Absaugeinrichtung 10'a wird dann das überschüssige Pulver mit den entsprechend nachgeschalteten Einrichtungen ähnlich wie bei der bodenseitigen Reinigungseinrichtung abgeleitet.

Wenn die bodenseitige Reinigungseinrichtung 8a ihre oberste vertikale Verfahrstetlung einnimmt, kann auch die Oberseite dieser Reinigungseinrichtung 8a mittels der Reinigungseinrichtung 8'a, welche dem Deckenteil 4 zugeordnet ist, weitgehend vollständig und automatisch abgereinigt werden. Somit gestattet die an Hand den Figuren 3 und 4 gezeigte Ausführungsform zusätzlich noch eine Möglichkeit für eine automatische Abreinigung der bodenseitigen Reinigungseinrichtung 8a und zur automatischen Abreinigung der Abschnitte 4a, 4b des Deckenteils 4.

Wie schematisch aus der vergrößerten Ausschnittsdarstellung in Figur 4 zu ersehen ist, ist die bodenseitige Reinigungseinrichtung 8a ähnlich einer Düsenplatte 34 ausgebildet, welche das Bodenteil 3'a bildet. Über den Außenumfang verteilt hat diese Düsenplatte 34 entsprechend angeordnete Düsenöffnungen für die Abblaseinrichtung 9a und die Absaugeinrichtung 10a. Wie die schematischen Strömungspfeile verdeutlichen, wird in Bewegungsrichtung der Reinigungseinrichtung 8a gesehen nachlaufend die Blasluft auf die entsprechende Wandfläche des Kabineninnenraums 5 gerichtet, und die entsprechenden Saugdüseneinrichtungen der Absaugeinrichtung 10a saugen unmittelbar die mittels der Abblasluft von der Wand abgelösten Pulverpartikel ein, so daß in zuverlässiger Weise verhindert wird, daß die mittels der Blasluft abgelösten Pulverpartikel in den Raum in Figur 4 unterhalb der Reinigungseinrichtung 8a gelangen können. Mit entsprechend nicht näher dargestellten Ventilen können natürlich die entsprechenden Ströme der Blasluft und der Saugluft gesteuert werden.

Wenn die Abreinigung des Kabineninnenraums S der Beschichtungskabine 1 abgeschlossen ist, werden mittels der Betätigungseinrichtung 32 die Abschnitte 4a und 4b des Decken- teils 4 wieder auseinandergefahren und geringfügig auf den oberen Umfangsrand der Umfangswand abgesenkt. Die ringförmige Reinigungseinrichtung 31 bewegt sich dann wieder nach außen in ihre Bereitschaftsstellung, wie dies in Figur 3 verdeutlicht ist. Auch wird zwischen den Abschnitten 4a und 4b des Deckenteils 4 wiederum der Durchgangsschlitz 17 gebildet.

Natürlich kann die ringförmige Reinigungseinrichtung 31 auch abweichend wie die an Hand den Figuren 3 und 4 dargestellte Ausführungsform ausgestaltet werden. Gleiches oder ähnliches gilt auch für die Düseneinrichtungen 33. Auch die Betätigungseinrichtung 32 kann gegebenenfalls auf abweichende Weise ausgestaltet werden.

Wesentlich bei der an Hand den Figuren 3 und 4 dargestellten bevorzugten Ausführungsvariante ist es, daß man mit Hilfe einer dem Deckenteil 4 zugeordneten Reinigungseinrichtung 8'a sowohl das Deckenteil 4 selbst als auch das Bodenteil 3'a vollautomatisch abreinigen kann. Natürlich lassen sich auch bei dieser Ausführungsvariante nach den Figuren 3 und 4 auch gleiche oder ähnliche Einrichtungen wie bei den voranstehenden Ausführungsformen gegebenenfalls vorsehen.

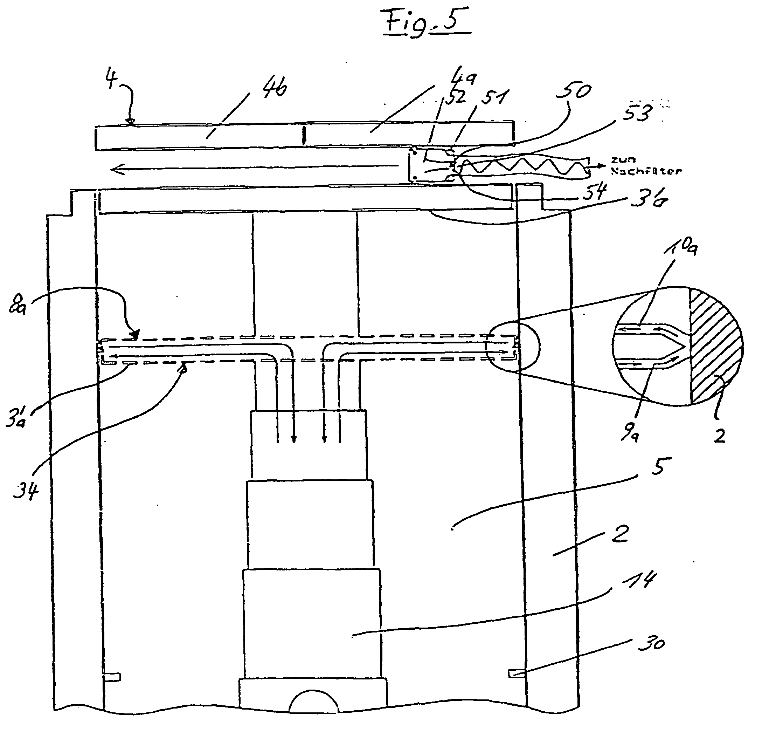

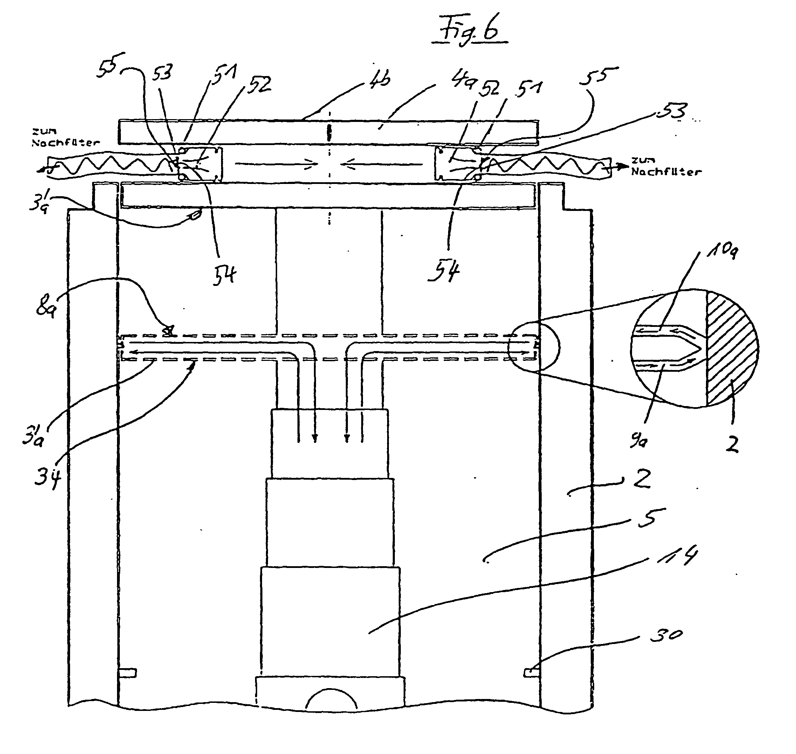

Die Figuren 5 und 6 dienen zur Erläuterung einer alternativen Ausführungsform einer Beschichtungskabine, welche ausgehend von der Darstellung nach Figur 4 insbesondere hinsichtlich der Abreinigung des Raums zwischen dem Deckenteil und dem Bodenteil abweichend ausgelegt ist. Die Grundauslegungsform der Beschichtungskabine sowie des Bodenteils 3'a und des zugeordneten Deckenteils 4, welches die beiden Abschnitte 4a und 4b umfaßt, stimmt mit den in Figur 4 dargestellten und zuvor bereits erörterten Einzelheiten weitgehend überein. Daher kann eine nähere Beschreibung dieser Einzelheiten entfallen. In Abweichung von der Darstellung nach Figur 4 können die dort gezeigten Absaugeinrichtungen 10'a, welche mit dem Deckenteil 4 in kommunizierender Verbindung stehen, ersatzlos entfallen.

Wie in Figur 5 gezeigt ist, weist die dort dargestellte Beschichtungskabine eine dem Deckenteil 4 zugeordnete Decken-Abreinigungseinrichtung 50 auf. Diese Decken-Abreinigungseinrichtung 50 bei der Ausführungsform nach Figur 5 umfaßt Druckluftdüsen 51, welche einen Druckluftstrom auf die zugeordneten Bereiche des Deckenteils und des Bodenteils in seiner Einstellung richten. Ferner umfaßt die Decken-Abreinigungseinrichtung 50 eine Absaugeinrichtung 52, welche die mittels den Druckluftdüsen 51 abgegebene und das anhaftende Pulver abreinigende Luft absaugt, wozu beispielsweise ein oder mehrere Saugschlauchanschlüsse 53 an der Decken-Abreinigungseinrichtung 50 vorgesehen sein können. Diese Decken-Abreinigungseinrichtung 50 ist vorzugsweise an einer Teleskopschienenanordnung aufgehängt, und hierdurch ist sie in dem gesamten Raum zwischen dem Deckenteil 4 und dem Bodenteil 3, 3'a parallel zu diesen, d.h. längsverschieblich, angeordnet. Die entsprechend hierfür erforderlichen Bewegungsantriebe sind in den Figuren 5 und 6 der Zeichnung nicht näher dargestellt, da es sich hierbei um übliche Antriebseinrichtungen handeln kann. Somit gestattet die Decken-Abreinigungseinrichtung 50, daß das mit Hilfe der über die Druckluftdüsen 51 abgegebenen Druckluft abgeblasene Pulver sofort über die Absaugeinrichtung 52 der Decken-Abreinigungseinrichtung 5 selbst abgesaugt wird. Es sind somit sehr kurze Leitungswege zwischen den Druckluftdüsen 51 und dem Eintritt der Absaugeinrichtung 52 vorhanden, um ein möglichst effektives Arbeiten der Decken-Abreinigungseinrichtung 50 zu erreichen. Für die Absaugeinrichtung 52 können an der Decken-Abreinigungseinrichtung 50 ein oder mehrere Saugschlauchanschlüsse 53 vorgesehen sein, welche vorzugsweise mit einem nicht näher dargestellten Nachfilter einer Pulverrückgewinnungseinrichtung verbunden sein können und mittels Klappen 54 in entsprechend steuerbarer Weise zugeschaltet werden können. Natürlich kann die Absaugeinrichtung 52 auch mit anderen nachgeschalteten Einrichtungen, wie Zykloneinrichtungen oder dergleichen, verbunden sein.

Bei der Ausführungsform einer Beschichtungskabine nach Figur 6 umfaßt die Decken-Abreinigungseinrichtung 50 in Abweichung von Figur 5 zwei Reinigungseinheiten 55, die jeweils entsprechend der vorbeschriebenen Decken-Abreinigungseinrichtung 50 ausgelegt sind. Diese Reinigungseinheiten 55 können längs Teleskopschienen unabhängig voneinander in dem Raum zwischen dem Deckenteil 4 und dem Bodenteil 3, 3'a verfahren werden. Somit deckt jede Reinigungseinheit 55 nur etwa die Hälfte des abzureinigenden Bereichs zwischen dem Deckenteil 4 und dem Bodenteil 3, 3'a ab.

Insbesondere bleibt noch anzumerken, daß bei den bevorzugten Ausführungsformen der Decken-Abreinigungseinrichtungen 50 nach den Figuren 5 und 6 die Absaugeinrichtungen 10'a an den jeweiligen Abschnitten 4a, 4b des Deckenteils 4 ersatzlos entfallen können. Hierdurch vereinfacht sich natürlich insbesondere die Auslegung der Deckenbereichs einer erfindungsgemäßen Beschichtungskabine und man erhält eine kompakte Decken-Abreinigungseinrichtung 50, so daß die gesamte Beschichtungskabine geringe Höhenabmessungen hat.

Obgleich vorangehend nicht näher erläutert ist, kann gegebenenfalls die Beschichtungskabine auch im Beschichtungsbetrieb so arbeiten, daß die Absaugung am Boden und/oder der Decke insgesamt genutzt wird. Wenn für den Beschichtungsbetrieb beispielsweise in Kabinenlängsrichtung verlaufende schlitzförmige Absaugeinrichtungen vorgesehen sind, wird die Reinigungseinrichtung am Boden und/oder an der Decke derart ausgestattet, daß zugleich auch die schlitzförmigen, in Kabinenlängsrichtung verlaufenden Absaugeinrichtungen mit abgereinigt werden.

### Bezugszeichenliste

- 1: Beschichtungskabine insgesamt
- 2: Mantelförmige Umfangswand
- 3, 3'a: Bodenteil
- 4: Deckenteil
- 4a: Abschnüt von Deckenteil
- 4b: Abschnitt von Deckenteil
- 5: Innenraum
- 7: Abschottung
- 8, 8a: Reinigungseinrichtung
- 8'. 8'a: Reinigungseinrichtung
- 9, 9a: Abblaseinrichtung
- 9', 9'a: Abblaseinrichtung
- 10, 10a: Absaugeinrichtung
- 10', 10'a: Absaugeinrichtung
- 11: Blasdüsen
- 12: Saugöffnung
- 13: Pfeil für Bewegung der Reinigungseinrichtung in vertikaler Richtung
- 14: Absaugleitung
- 15: Schlauchleitung
- 16: Schlauchtrommel
- 17: Durchgangsschlitz
- 18: Abschlußplatte
- 20: Klappe
- 21: Schlitz
- 30: Reinigungseinrichtung
- 32: Betätigungseinrichtung
- 33: Düseneinrichtung
- 34: Düsenplatte
- 50: Decken-Abreinigungseinrichtung
- 51: Druckluftdüsen
- 52: Absaugeinrichtung
- 53: Saugschlauchanschlüsse
- 54: Klappen
- 55: Reinigungseinheit

## Patentansprüche

1. Beschichtungskabine, insbesondere Pulverbeschichtungskabine mit einer Umfassungswand (2), einem Boden und einer Decke, welche einen Innenraum (5) begrenzen, weiterhin mit einer Reinigungseinrichtung, die zum Reinigen des Innenraums in vertikaler Richtung bewegbar ist und bei der zumindest der Boden und/oder die Decke als Bodenteil (3) bzw. als Deckenteil (4) ausgebildet und getrennt von der Umfassungswand (2) ist, **dadurch gekennzeichnet, dass** das Bodenteil und/oder das Deckenteil zugleich die Reinigungseinrichtung (8, 8') aufweist, wobei das Bodenteil und/oder das Deckenteil zur Abreinigung im Innenraum (5) der Kabine in vertikaler Richtung (13) auch bewegbar ist.

2. Beschichtungskabine nach Anspruch 1, **dadurch gekennzeichnet**, daβ die Reinigungseinrichtung (8, 8') in das Bodenteil (3) und/oder das Deckenteil (4) integriert ist.

3. Beschichtungskabine nach einem der Ansprüche 1 oder 2, **dadurch gekennzeichnet**, **daβ** die Reinigungseinrichtung (8, 8') eine Abblaseinrichtung (9, 9') und eine Absaugeinrichtung (10, 10') umfaßt.

4. Beschichtungskabine nach Anspruch 3, **dadurch gekennzeichnet**, **daβ** die Abblaseinrichtung (9, 9') und die Absaugeinrichtung (10, 10') axial beabstandet zueinander angeordnet sind.

5. Beschichtungskabine nach Anspruch 3 oder 4, **dadurch gekennzeichnet, daß** der in Bewegungsrichtung (Pfeil 13) vorauslaufende Bereich der Reinigungseinrichtung (8, 8') als Abblaseinrichtung (9, 9'), und der nachlaufende Bereich als Absaugeinrichtung (10, 10') oder umgekehrt ausgebildet ist.

6. Beschichtungskabine nach Anspruch 3, **dadurch gekennzeichnet**, **daβ** die dem Bodenteil (3) zugeordnete Abblaseinrichtung (9) und Absaugeinrichtung (10) in Form einer Düsenplatte (34) ausgebildet sind und an dem zugeordneten Umfangswandbereich die Absaugung in unmittelbarer Nähe des Auftreffbereichs der Blasluft erfolgt.

7. Beschichtungskabine nach einem der Ansprüche 5 oder 6, **dadurch gekennzeichnet, daß** die Abblaseinrichtung (9, 9') mehrere in Umfangsrichtung verteilt angeordnete Düsen (11) umfaßt.

8. Beschichtungskabine nach einem der Ansprüche 3 bis 7, **dadurch gekennzeichnet, daß** die Absaugeinrichtung (10, 10') mehrere in Umfangsrichtung verteilt angeordnete Saugöffnungen (12) umfaßt.

9. Beschichtungskabine nach einem der Ansprüche 1 bis 8 , **dadurch gekennzeichnet, daß** zusätzlich im Bodenbereich und/oder Deckenbereich der Kabine (1) eine Abschottung (7, 18) vorgesehen ist.

10. Beschichtungskabine nach einem der Ansprüche 1 bis 9, **dadurch gekennzeichnet, daß** das Bodenteil (3) und/oder das Deckenteil (4) wenigstens zwei Abschnitte (4a, 4b) umfaßt, welche zur Abreinigung aufeinanderzu bewegbar und dann im Innenraum (5) der Kabine in vertikaler Richtung (13) bewegbar sind.

11. Beschichtungskabine und einem der Ansprüche 3 bis 10, **dadurch gekennzeichnet, daß** die dem Deckenteil (4) zugeordnete Abblaseinrichtung (9'a) in Form eines an den Querschnitt der Beschichtungskabine angepaßten Blasrings (31) ausgebildet ist, welcher bei zur Abreinigung zusammengefahrener Stellung der Abschnitte (4a, 4b) des Deckenteils (4) (5) dem Innenraum (5) zugewandt anordenbar ist.

12. Beschichtungskabine nach Anspruch 11, **dadurch gekennzeichnet, daß** eine Betätigungseinrichtung (32) die Abschnitte (4a, 4b) des Deckenteils (4) für den Abreinigungsbetrieb aufeinanderzu bewegt und gegebenenfalls zugleich von dem oberen Rand der Umfangswand (2) abhebt.

13. Beschichtungskabine nach Anspruch 14, **dadurch gekennzeichnet, daß** die Betätigungseinrichtung (32) in Form eines Kniehebelmechanismusses ausgelegt ist.

14. Beschichtungskabine nach einem der Ansprüche 10 bis 13, **dadurch gekennzeichnet, daß** bei einem zwei Abschnitte (4a, 4b) umfassenden Deckenteil (4) im Beschichtungsbetrieb die beiden Abschnitte (4a, 4b) zur Begrenzung eines Durchgangsschlitzes (17) beabstandet sind.

15. Beschichtungskabine nach einem der vorangehenden Ansprüche, **dadurch gekennzeichnet, daß** die Absaugeinrichtung (10, 10', 10a, 10') steuerbare Klappen (20) zur der nachgeschalteten Zykloneinrichtung, Nachfiltereinrichtung und/oder Rückgewinnungseinrichtung enthält.

16. Beschichtungskabine nach einem der Ansprüche 1 bis 10 und 12 bis 15, **dadurch gekennzeichnet, daß** dem Deckenteil (4) wenigstens eine Decken-Abreinigungseinrichtung (50) zugeordnet ist, welche Druckluftdüsen (51) zum Abblasen des anhaftenden Pulvers und wenigstens eine Absaugeinrichtung (52) in der Decken-Abreinigungseinrichtung (50) für das abgeblasene Pulver umfaßt, und die den gesamten Raum zwischen dem Deckenteil (4) und dem Bodenteil (3, 3'a) in seiner Endstellung abreinigt.

17. Beschichtungskabine nach Anspruch 16, **dadurch gekennzeichnet, daß** die Decken-Abreinigungseinrichtung (50) einen oder mehrere Saugschlauchanschlüsse (53) für die Absaugeinrichtung (52) umfaßt.

18. Beschichtungskabine nach Anspruch 16 oder 17, **dadurch gekennzeichnet, daß** die Absaugeinrichtung (52) mit einem Nachfilter einer Pulverrückgewinnungseinrichtung verbunden ist.

19. Beschichtungskabine nach einem der Ansprüche 16 bis 18, **dadurch gekennzeichnet, daß** die Verbindung der Absaugeinrichtung (52) mit einer nachgeschalteten Einrichtung, vorzugsweise mit einem Nachfilter, mittels Klappen (54) steuerbar ist.

20. Beschichtungskabine nach einem der Ansprüche 16 bis 19, **dadurch gekennzeichnet, daß** die Decken-Abreinigungseinrichtung (50) in dem Raum zwischen dem Deckenteil (4) und dem Bodenteil (3, 3'a) längsverschieblich vorzugsweise mittels einer Teleskopschienenanordnung angeordnet ist.

21. Beschichtungskabine nach einem der Ansprüche 16 bis 20, **dadurch gekennzeichnet, daß** die Decken-Abreinigungseinrichtung (50) zwei Reinigungseinheiten (55) umfaßt, welche jeweils den zugeordneten halben Raum zwischen dem Deckenteil (4) und dem Bodenteil (3, 3'a) abreinigen.

## Claims

1. Coating booth, especially a powder coating boot comprising an enclosing wall (2), a floor and a roof, which delimit an interior space (5), and also comprising a cleaning device which can be moved in a vertical direction for cleaning the interior space, and in which booth at least the floor and/or the roof are designed as a floor part (3) or as a roof part (4) respectively and are separate from the enclosing wall (2), **characterised in that** the floor part and/or the roof part also have the cleaning device (8, 8'), the floor part and/or the roof part also being moveable in a vertical direction (13) for cleaning in the interior space (5) of the booth.

2. Coating booth according to claim 1, **characterised in that** the cleaning device (8, 8') is integrated into the floor part (3) and/or into the roof part (4).

3. Coating booth according to one of claims 1 or 2, **characterised in that** the cleaning device (8, 8') comprises a blast device (9, 9') and an exhaust device (10, 10').

4. Coating booth according to claim 3, **characterised in that** the blast device (9, 9') and the exhaust device (10, 10') are arranged with a certain axial distance between them.

5. Coating booth according to claim 3 or 4, **characterised in that** the area of the cleaning device (8, 8') which leads in the direction of motion (arrow 13) is designed as a blast device (9, 9') and the trailing area as an exhaust device (10, 10'), or vice versa.

6. Coating booth according to claim 3, **characterised in that** the blast device (9) and the exhaust device (10) assigned to the floor part (3) are designed in the form of a nozzle plate (34), and on the associated area of the peripheral wall the exhaust occurs in the immediate vicinity of the area struck by the blast air.

7. Coating booth according to one of claims 5 or 6, **characterised in that** the blast device (9, 9') comprises a plurality of nozzles (11) distributed around the circumference.

8. Coating booth according to one of claims 3 to 7, **characterised in that** the exhaust device (10, 10') comprises a plurality of vacuum orifices (12) distributed around the circumference.

9. Coating booth according to one of claims 1 to 8, **characterised in that** a partition wall (7, 18) is also provided in the floor area and/or roof area of the booth (1).

10. Coating booth according to one of claims 1 to 9, **characterised in that** the floor part (3) and/or the roof part (4) comprise at least two sections (4a, 4b) which, for cleaning, can be moved towards each other and then in a vertical direction (13) in the interior space (5) of the booth.

11. Coating booth according to one of claims 3 to 10, **characterised in that** the blast device (9'a) assigned to the roof part (4) is designed in the form of a blast ring (31) adapted to conform to the cross-section of the coating booth, which ring can be arranged to face the interior space (5) after the sections (4a, 4b) of the roof part (4) have been brought together for cleaning.

12. Coating booth according to claim 11, **characterised in that** an actuating device (32) moves the sections (4a, 4b) of the roof part towards each other for the cleaning operation and possibly lifts them from the upper edge of the peripheral wall (2) at the same time.

13. Coating booth according to claim 14, **characterised in that** the actuating device (32) is designed in the form of a knee lever mechanism.

14. Coating booth according to one of claims 10 to 13, **characterised in that,** in the case of a roof part (4) comprising two sections (4a, 4b), during the coating operation the two sections (4a, 4b) are a certain distance apart to form the boundaries of an access slot (17).

15. Coating booth according to one of the preceding claims, **characterised in that** the exhaust device (10, 10', 10a, 10') has controllable flap valves (20) for the downstream cyclone separator, after-filter device, and/or recovery device.

16. Coating booth according to one of claims 1 to 10 and 12 to 15, **characterised in that** at least one roof cleaning device (50) is assigned to the roof part (4), which device comprises compressed air nozzles (51) for blowing off the adhering powder and at least one exhaust device (52) in the roof cleaning device (50) for the blown-off powder, and which cleans the entire space between the roof part (4) and the floor part (3, 3a) when in its end position.

17. Coating booth according to claim 16, **characterised in that** the roof cleaning device (50) has one or more vacuum hose connections (53) for the exhaust device (52).

18. Coating booth according to claim 16 or 17, **characterised in that** the exhaust device (52) is connected to an after-filter of a powder recovery device.

19. Coating booth according to one of claims 16 to 18, **characterised in that** the connection of the exhaust device (52) to a downstream device, preferably an after-filter, can be controlled by means of flap valves (54).

20. Coating booth according to one of claims 16 to 19, **characterised in that** the roof cleaning device (50) is arranged so that it can slide longitudinally, preferably by means of a telescoping rail arrangement, in the space between the roof part (4) and the floor part (3, 3'a).

21. Coating booth according to one of claims 16 to 20, **characterised in that** the roof cleaning device (50) has two cleaning units (55), each of which cleans the associated half of the space between the roof part (4) and the floor part (3, 3'a).

## Revendications

1. Cabine de revêtement, en particulier cabine de revêtement par poudre avec une paroi de pourtour (2), un sol et un plancher, qui délimitent un espace intérieur (5), également avec un dispositif de nettoyage, qui peut être déplacé dans le sens vertical pour le nettoyage de l'espace intérieur, et sur laquelle au moins le sol et/ou le plafond sont réalisés sous la forme d'une partie de sol (3) ou d'une partie de plafond (4) et sont séparés de la paroi de pourtour (2), **caractérisée en ce que** la partie de sol et/ou la partie de plafond présentent en même temps l'appareil de nettoyage (8, 8'), la partie de sol et/ou la partie de plafond pouvant être déplacées également pour le nettoyage dans l'espace intérieur (5) de la cabine dans le sens vertical (13).

2. Cabine de revêtement selon la revendication 1, **caractérisée en ce que** le dispositif de nettoyage (8, 8') est intégré dans la partie de sol (3) et/ou la partie de plafond (4).

3. Cabine de revêtement selon l'une des revendications 1 ou 2, **caractérisée en ce que** le dispositif de nettoyage (8, 8') comprend un dispositif de soufflage (9, 9') et un dispositif d'aspiration (10, 10').

4. Cabine de revêtement selon la revendication 3, **caractérisée en ce que** le dispositif de soufflage (9, 9') et le dispositif d'aspiration (10, 10') sont disposés axialement espacés l'un de l'autre.

5. Cabine de revêtement selon la revendication 3 ou 4, **caractérisée en ce que** la zone, précédant dans le sens de déplacement (flèche 13), du dispositif de nettoyage (8, 8') est conçue comme un dispositif de soufflage (9, 9') et la zone arrière dans le sens de déplacement est conçue comme dispositif d'aspiration (10, 10') ou inversement.

6. Cabine de revêtement selon la revendication 3, **caractérisée en ce que** le dispositif de soufflage (9) attribué à la partie de sol (3) et, le dispositif d'aspiration (10) sont réalisés sous la forme d'une plaque de buses (34) et l'aspiration s'effectue à proximité immédiate de la zone de rencontre de l'air de soufflage sur la zone de paroi de pourtour attribuée.

7. Cabine de revêtement selon l'une des revendications 5 ou 6, **caractérisée en ce que** le dispositif de soufflage (9, 9') comprend plusieurs buses (11) disposées dans le sens périphérique.

8. Cabine de revêtement selon l'une des revendications 3 à 7, **caractérisée en ce que** le dispositif d'aspiration (10, 10') comprend plusieurs ouvertures d'aspiration (12) disposées et réparties dans le sens périphérique.

9. Cabine de revêtement selon l'une des revendications 1 à 8, **caractérisée en ce qu'**une cloison (7, 18) est prévue en supplément dans la zone du fond et/ou dans la zone du plafond de la cabine (1).

10. Cabine de revêtement selon l'une des revendications 1 à 9, **caractérisée en ce que** la partie de sol (3) et/ou la partie de plafond (4) présentent au moins deux parties (4a, 4b) qui peuvent être déplacées l'une vers l'autre pour le nettoyage et peuvent être déplacées ensuite dans l'espace intérieur (5) de la cabine dans le sens vertical (13).

11. Cabine de revêtement selon l'une des revendications 3 à 10, **caractérisée en ce que** le dispositif de soufflage (9'a) attribué à la partie de plafond (4) est réalisé sous la forme d'une bague de soufflage (31) adaptée à la section de la cabine de revêtement, laquelle peut être disposée tournée vers l'intérieur (5) avec une position, regroupée pour le nettoyage, des parties (4a, 4b) de la partie de plafond (4) (5).

12. Cabine de revêtement selon la revendication 11, **caractérisée en ce qu'**un dispositif d'actionnement (32) déplace les parties (4a, 4b) de la partie de plafond (4) l'une vers l'autre pour le mode de nettoyage et éventuellement les soulève en même temps du bord supérieur de la paroi de pourtour (2).

13. Cabine de revêtement selon la revendication 14, **caractérisée en ce que** le dispositif d'actionnement (32) est conçu sous la forme d'un mécanisme à levier coudé.

14. Cabine de revêtement selon l'une des revendications 10 à 13, **caractérisée en ce que**, sur une partie de plafond (4) comprenant deux parties (4a, 4b), les deux parties (4a, 4b) sont espacées dans le mode de revêtement pour la délimitation d'une fente de passage (17).

15. Cabine de revêtement selon l'une des revendications précédentes, **caractérisée en ce que** le dispositif d'aspiration (10, 10', 10a, 10') contient des clapets (20) contrôlables pour le dispositif de cyclone placé en aval, le dispositif de filtre complémentaire ou le dispositif de recyclage.

16. Cabine de revêtement selon l'une des revendications 1 à 10 et 12 à 15, **caractérisée en ce qu'**à la partie de plafond (4) est attribué au moins un dispositif de nettoyage de plafond (50), qui comprend des buses d'air comprimé (51) pour l'évacuation par soufflage de la poudre adhérente et au moins un dispositif d'aspiration (52) dans le dispositif de nettoyage de plafond (50) pour la poudre enlevée par soufflage, et qui nettoie l'ensemble de l'espace entre la partie de plafond (4) et la partie de sol (3, 3'a) dans sa position extrême.

17. Cabine de revêtement selon la revendication 16, **caractérisée en ce que** le dispositif de nettoyage de plafond (50) comprend un ou plusieurs branchements de flexible d'aspiration (53) pour le dispositif d'aspiration (52).

18. Cabine de revêtement selon la revendication 16 ou 17, **caractérisée en ce que** le dispositif d'aspiration (52) est relié à un filtre complémentaire d'un dispositif de recyclage de poudre.

19. Cabine de revêtement selon l'une des revendications 16 à 18, **caractérisée en ce que** la liaison du dispositif d'aspiration (52) peut être contrôlée avec un appareil placé en aval, de préférence avec un filtre complémentaire, au moyen de clapets (54).

20. Cabine de revêtement selon l'une des revendications 16 à 19, **caractérisée en ce que** le dispositif de nettoyage de plafond (50) est disposé dans l'espace entre la partie de plafond (4) et la partie de sol (3, 3'a), coulissant dans le sens de la longueur de préférence, au moyen d'un dispositif de rail télescopique.

21. Cabine de revêtement selon l'une des revendications 16 à 20, **caractérisée en ce que** le dispositif de nettoyage de plafond (50) comprend deux unités de nettoyage (56), qui nettoient respectivement le demi-espace attribué entre la partie de plafond (4) et la partie de sol (3, 3'a).
